# EUROPEAN PATENT APPLICATION

(11) **EP 2 708 743 A1**
(43) Date of publication of application: **19.03.2014**
(21) Application number: 12782720.2
(22) Date of filing: 08.05.2012
(51) Int. Cl.: F03D 11/00

(54) **WINDMILL**

(30) Priority: 10.05.2011 JP 2011105629
(71) Applicant: Mitsubishi Heavy Industries, Ltd., Tokyo 108-8215 (JP)
(72) Inventor: NAKA Takehiro, Tokyo 108-8215 (JP); TSUMURA Yoichiro, Tokyo 108-8215 (JP); MATSUSHITA Takatoshi, Tokyo 108-8215 (JP)
(74) Representative: Intès, Didier Gérard André
(86) International application number: PCT/JP2012/061704
(87) International publication number: WO 2012/153717

(57) **Abstract**

In lightning protection equipment of a wind turbine, it is required to ease the maintenance with maintaining high safety. The lightning current received by a receptor of a blade is conducted to an earth line in the blade. The earth line is conducted to the internal space of the rotor head via the internal side space of the bearing for changing the pitch angle of the blade. It is possible to conduct the lightning current to the rotor head side without using the bearing as the current route and without using a sliding or wearing member such as a brash or the like.

## Description

### Technical Field

The present invention relates to a lightning protection of a wind turbine.

### Background Art

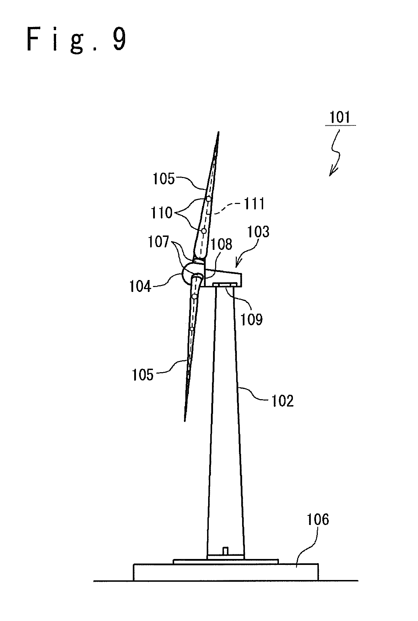

Generally, countermeasures against lightning are implemented for blades of a wind turbine. Fig. 9 is a side view showing an example of a wind turbine. A tower 102 of the wind turbine 101 is built on the basement 106. A nacelle 103 is mounted on the tower 102 via a yaw bearing 109. The nacelle 103 can rotate around the yaw axis being an approximately vertical rotation axis by the yaw bearing 109. A rotor head 104 is mounted on an end of the nacelle 103 via a main bearing 108. The rotor head can rotate to the nacelle 103 around the main axis being an approximately horizontal rotation axis by the main bearing 108. A plurality of blades 105 which are arranged in the circumferential direction of the main axis are mounted on the rotor head 104 via the blade bearing 107. The blade 105 can rotate around a pitch axis being a rotation axis of the blade bearing 107 to be directed to a controlled pitch angle.

By the wind force received by the blades 105, the rotor head 104 rotates, and then the main axis supported by the main bearing 108 is rotated. The rotation of the main axis is accelerated by a step-up gear arranged inside the nacelle 103 and drives a generator to generate an electric power.

For the lightning protection, a plurality of receptors (metallic lightning receiving parts) for receiving the lightning discharge are mounted on the surface of each blade 105. The receptor 110 is connected to the down conductor 111 (pull-down wire) which is arranged through the inside of the blade. The lightning current conducted to the root of the blade by the down conductor 111 is electrically connected to the earth line. The earth line is grounded through a route of the lightning current provided in the rotor head 104, the nacelle 103, and the tower 102.

In such a lightning protection structure of the wind turbine 101, the route of the lightning current is required to be grounded through rotatable parts such as the blade bearing 107, the main bearing 108, the yaw bearing 109 or the like by some kind of means. By utilizing these bearings as a part of the conducting line of the lightning current, it is possible for the down conductor 111 to be grounded and to let the lightning current from the receptor 110 of the blade 105 off.

For further enhancing the safety or the durability, a structure of conducting the lightning current by bypassing the bearing parts may be considered. Specifically, by utilizing the earth brash or the sliding contact as the bypassing means, it is possible for a part of the lightning current flowing through bearings to bypass the bearings.

### Citation List

### [Patent Literature]

Patent Literature 1: U.S. Patent No. 7390169

### Summary of the Invention

In the above-mentioned bypassing means, since consumable supplies which are subjected to the sliding or abrasion by the rotation of the bearings are used, it is required to maintenance them periodically. Then, a lightning protection technique which can ease the maintenance is desired.

A means of utilizing a spark gap can also be adopted. In the spark gap, a current route between a bearing is formed via a gap, and the current flows via the gap by a spark. However, in this means, some countermeasures for overcoming the following problems are required.
(1) There may be a case where the bypassing is not enough and a current flows through the bearing or other unexpected parts.
(2) The electromagnetic wave generated by the spark may cause undesired influences on the control devices and the like.
(3) The members of the gap structure itself and the members around it may suffer physical damages by the spark.
(4) The gap length varies by the aging so that the spark characteristics change.

Considering the above problems, a lightning protection technique using a current route which does not require the spark gap and being able to ease the maintenance is desired.

According to an aspect of the present invention, the lightning current received by a receptor of a blade is conducted to an earth line in the blade. The earth line is conducted to the internal space of the rotor head via the internal side space of the bearing for changing the pitch angle of the blade. It is possible to conduct the lightning current to the rotor head side without using the bearing as the current route and without using a sliding or wearing member such as a brash or the like.

According to an aspect of the present invention, a wind turbine includes: a rotor head; a blade on which a receptor for receiving a lightning discharge is mounted; a bearing configured to connect the blade to the rotor head such that a pitch angle of the blade is variable; and an earth line configured to conduct the lightning discharge to a side of the rotor head via the blade and a space of an internal side of the bearing.

According to another aspect of the present invention, the wind turbine further includes: a blade attachment plate fixed to at least one of: an edge surface of a blade root of the blade; an inner surface of the blade root; and a step formed in the inner surface of the blade root, by a connecting means; and the blade attachment plate has a through hole through which the earth line passes.

According to further another aspect of the present invention, the wind turbine further includes: an electrically insulating member formed on an inner side of the through hole.

According to further another aspect of the present invention, the wind turbine further includes: a plate member attached on the bearing in an opposite side of the blade attachment plate. The earth line which is drawn via the through hole into an opposite side of the blade is routed along a surface of the blade attachment plate in a side of the bearing, and further routed along a surface of the plate member in an opposite side of the blade.

According to further another aspect of the present invention, the wind turbine further includes: a plate member attached on the bearing in an opposite side of the blade attachment plate. A first part of the earth line is attached to the blade attachment plate on a surface of a side of the blade, and a second part of the earth line is attached to the plate member in an opposite side of the blade, and an angle between an extending direction of the first part of the earth line and an extending direction of the second part of the earth line is 90 degree or less.

According to further another aspect of the present invention, the angle between the extending direction of the first part of the earth line and the extending direction of the second part of the earth line is 30 degree or less when the blade is in a feather position.

According to further another aspect of the present invention, the earth line has a slack portion at a part in the bearing.

According to further another aspect of the present invention, the wind turbine further includes a shield member fixed in the rotor head and configured to cover the earth line and made of a conductive material.

According to the present invention, it is possible to ease the maintenance for lightning protection equipment of a wind turbine.

### Brief Description of the Drawings

The above objects, other objects, effects, and characteristics of the present invention will become clearer by the description of embodiments with the accompany drawings, in which:
Fig. 1 shows a rotor head and the root of a blade according to a first embodiment of the present invention;
Fig. 2 is a cross-sectional view of a rotor head and the root of a blade according to a second embodiment of the present invention;
Fig. 3 is a cross-sectional view around a blade bearing for explaining a problem to be solved according to a third embodiment of the present invention;
Fig. 4 shows an arrangement of an earth line according to the third embodiment of the present invention;
Fig. 5 is a cross-sectional view around a blade bearing for explaining a wind turbine according to a fourth embodiment of the present invention;
Fig. 6 shows the route of an earth line when a blade is the feather state in the fourth embodiment of the present invention;
Fig. 7 shows the route of an earth line when a blade is the fine state in the fourth embodiment of the present invention;
Fig. 8A shows an example of an attaching means of a blade attachment plate;
Fig. 8B shows an example of an attaching means of a blade attachment plate;
Fig. 8C shows an example of an attaching means of a blade attachment plate; and
Fig. 9 is a side view showing an example of a wind turbine.

### Description of Embodiments

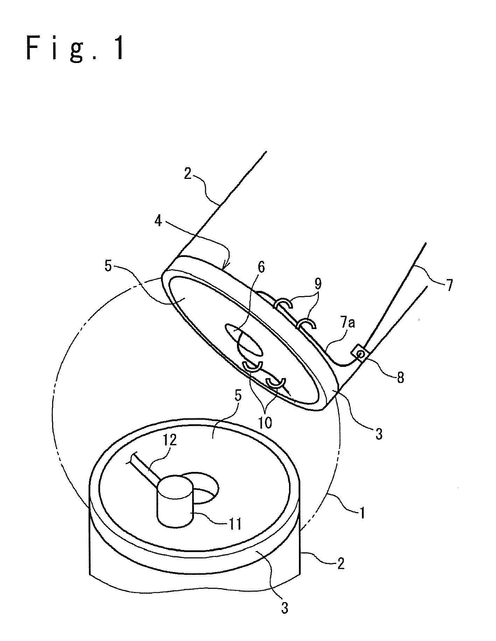

Some embodiments of the present invention will be explained below. The total structure of the wind turbine according to a first embodiment of the present invention is the same as that of the wind turbine explained with reference to Fig. 9. Fig. 1 shows the rotor head and the root of blades of the wind turbine in the first embodiment. The rotor head 1, the blade 2, and the blade bearing 3 correspond to the rotor head 104, the blade 105, and the blade bearing 107 explained in Fig. 9, respectively. In Fig. 1, the profile of the rotor head 1 is drawn with dotted lines, and the inside thereof is represented by a transparent view. Only the roots of two blades among three blades are drawn.

The blade bearing 3 is a circular-shaped bearing which supports the blade 2 such that the blade 2 is rotatable to the rotor head 1 in the pitch angle direction. The blade attachment plate 4 is attached to the surface of the blade bearing 3 on the blade 2 side. The blade attachment plate 4 has a through hole. The hole is formed in, for example, the center part of the blade attachment plate 4. The blade attachment plate 4 has a shape corresponding to the root of the blade 2. In the root part of the blade 2, a flange is formed. The flange is fixed to the blade attachment plate 4 by bolts so that the blade 2 is fixed to the blade attachment plate 4.

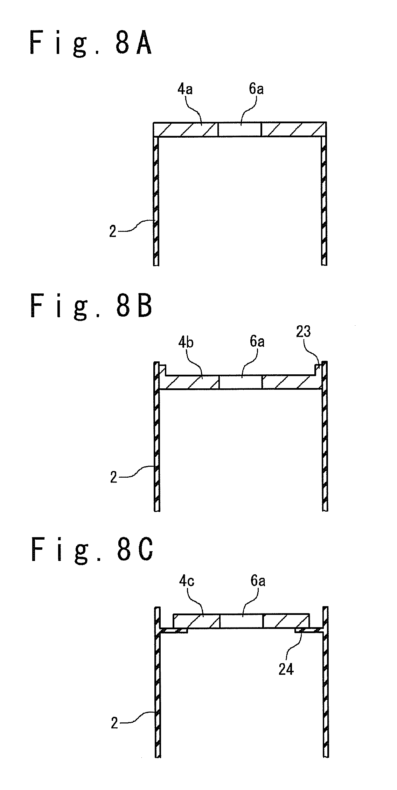

The means for fixing the blade attachment plate 4 to the blade 2 is not limited to the above-explained case. Figs. 8A to 8C are cross-sectional views of the means for fixing the blade attachment plate 4 to the blade 2. In the case shown in Fig. 8A, the blade attachment plate 4 is fixed to the blade 2 at the edge surface of the blade. In the case shown in Fig. 8B, the blade attachment plate 4b is fixed to the inner circumferential surface of the blade 2 near the blade edge. In this case, for example, an attachment part 23 such as a flange having a circumferential shape is formed on the outer circumferential surface of the blade attachment plate 4b, and by attaching the attachment part 23 to the inner circumferential surface of the blade 2, the blade attachment plate 4b can be fixed. In the example shown in Fig. 8C, on the inner circumferential surface of the blade 2 near the root of the blade, an uneven step which protrudes to the internal side thereof is formed as an attachment part 24. A blade attachment plate 4c of a disc shape having a bit smaller profile than the inner circumferential surface of the blade 2 is fixed inside the blade 2 to the attachment part 24 from the side of the blade root. The blade attachment plate 4a, 4b, 4c can be fixed to the blade 2 by the above-explained various means. For the fixing, any connection means such as a welding, a bolt fastening or the like can be adopted.

On the surface of the blade bearing 3 opposing to the blade 2, a connection shaft attachment plate 5 being a plate-shaped member is attached. The connection shaft attachment plate 5 has a hole. The hole is formed at the center portion of the connection shaft attachment plate 5, for example. A connection shaft 11 is attached to the connection shaft attachment plate 5. The connection shaft 11 is attached to the pitch angle driving means 12. The pitch angle driving means 12 drives the blade 2 to the pitch angle instructed by a control signal by pushing or pulling the connection shaft 11 by an actuator.

In the internal space of the blade 2, a down conductor 7 being a conducting wire for conducting a lightning current is arranged. An end portion of the down conductor 7 is connected to a receptor corresponding to the receptor 110 in Fig. 9. On the inner wall surface of the blade 2, a connection bracket 8 is attached. On the surface of the blade attachment plate 4 on the blade side (the side opposite to the blade bearing 3), a fixing bracket 9 is attached. The end of the down conductor 7 on the blade root side is electrically connected to the earth line 7a by the connection bracket 8. A part of the earth line 7a is wired along a predetermined route in the blade 2 by the fixing bracket 9. Another part of the earth line 7a is further conducted into the rotor head 1 through the hole 6 which is formed from the hole of the blade attachment plate 4, the space of the internal side of the blade bearing 3, and the hole of the connection shaft attachment plate 5, and attached to the surface of the connection shaft attachment plate 5 on the opposite side of the blade 2.

The earth 7a is preferably an insulated cable covered by an electrically insulating member. From the viewpoint of suppressing the shape deformation caused by a continuous applying of a lightning current, EPR (Ethylene Propylene Rubber) or XLPE (Cross-Linked Polyethylene) is preferable used as the insulation covering. These members are preferable for the earth line 7a of the present embodiment in the characteristics of the electrical insulating performance, the weathering resistance, the flame resistance, and the twist resistance (robustness to torsion or bending). Further, the oil resistance characteristic is also required for the earth line 7a since lubrication oil is used around the bearings. The above members are also preferable from this viewpoint because they have high oil resistance.

The blade 2 rotates relatively to the rotor head 1. As a result, accompanying to the blade rotation, torsion of the earth line 7a occurs. For permitting this torsion, the earth line 7a is fixed to have a slack (in the state being longer than the strain state) in the part of the blade bearing 3. Alternatively, as the earth line 7a, a wiring formed by connecting the earth line in the blade 2 and the earth line in the rotor head 1 to be rotatable to each other by a slip ring, a rotatable connector device, and the like.

In the example of Fig. 1, a fixing bracket 10 is attached in the surface of the connection shaft attachment plate 5 on the opposite side of the blade bearing 3. The earth line 7a derived from the hole 6 into the rotor head 1 is wired along a predetermined route in the rotor head 1 by the fixing bracket 10.

When lightning strikes the wind turbine having the above structure, the lightning current irrupted from a receptor is conducted in the blade 2 along the down conductor 7 to the direction of the blade root, and is passed to the earth line 7a. The lightning current flowing through the earth line 7a is conducted via the hole 6 to the route inside the rotor head 1. The lightning current is further conducted via a route not shown in the drawings being a wiring in the nacelle and the tower to the ground electrode. In such a structure, the lightning current of the lightning received by the receptor of the blade 2 can be conducted to the internal space of the rotor head 1 without flowing the lightning current through the blade bearing 3.

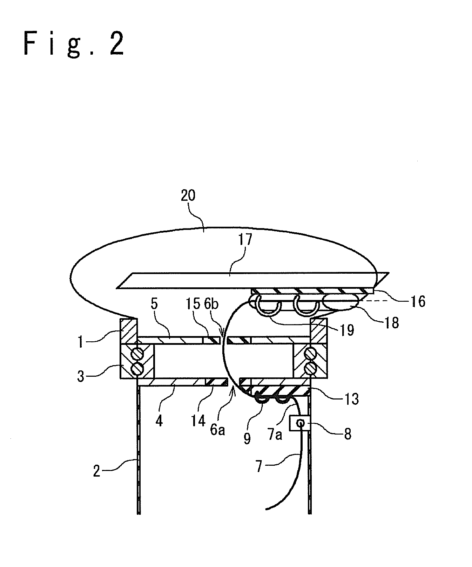

Fig. 2 is a cross sectional view showing the rotor head 1 and the blade root of one of the blades 2 according to the second embodiment of the present invention. Only the different points from the first embodiment are explained below. When lightning current passes through the earth line 7a which is drawn into the internal space of the rotor head 1 via the hole 6a of the blade attachment plate 4, the blade bearing 3, and the hole 6b of the connection shaft attachment plate 5, strong electromagnetic wave is generated. For suppressing the influence of the electromagnetic wave on the control devices and the like arranged in the rotor head 1, a shield member 18 made of metal is attached in the internal space of the rotor head 20. In the example of Fig. 2, the shield member 18 is attached to the metal member 17 (such as a structural beam for mounting some kind of equipment or the like) in the internal space of the rotor head 20 by a mounting bracket 19. The shield member 18 covers at least a part of the earth line 7a in the extending direction of the earth line 7a. Instead of the shield member 18, a metal duct may be installed in the internal space of the rotor head 20. The earth line 7a drawn into the internal space of the rotor head 20 is conducted via the internal space of the shield member 18 to the outside of the rotor head 1. The electromagnetic wave generated by the lightning current flowing through the earth line 7a is blocked by the shield member 18. As a result, the influence thereof to the control devices and the like in the internal space of the rotor head 20 is reduced.

When a lightning current is passing, a large potential difference is generated between the earth line 7a and the metal members supporting the earth line 7a. In a case where the tolerance width of the dielectric strength in the insulation covering of the earth line 7a is not enough, for further enhancing the safety, it is preferable to cover the surface of the metal member on the side of the earth line 7a by an electrically insulating member. In the example shown in Fig. 2, the electrically insulating member 13 covers the surface of a part of the blade attachment plate 4 along the wiring route of the earth line 7a. Further, the inner surfaces of the hole 6a and hole 6b are covered by the electrically insulating members 14 and 15, respectively. Moreover, the above-mentioned shield member 18 is also fixed to the metal member 17 via the electrically insulating member 16. According to such a structure, it is possible to set a route of the lightning current passing through the internal side of the blade bearing 3 with maintaining high safety and reliability.

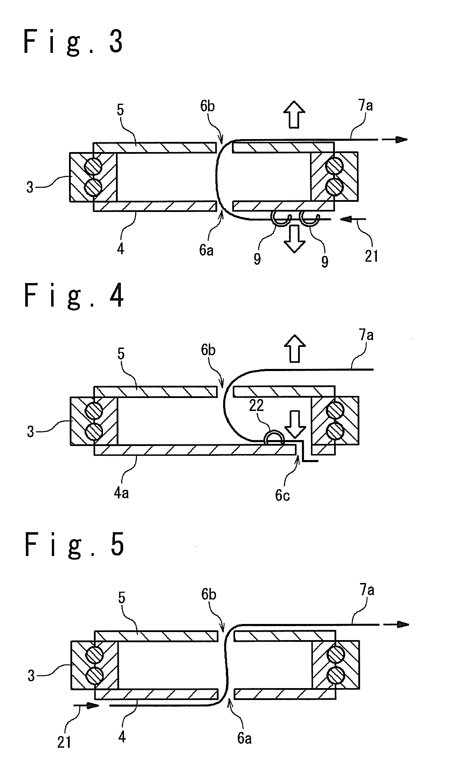

Next, the third embodiment of the present invention is explained. Only the portions different from the first and second embodiments will be explained. Fig. 3 is a cross sectional view around the blade bearing 3 for explaining the problem to be solved in the third embodiment. In the example of this figure, the earth line 7a is arranged such that a part on the blade 2 side of the blade attachment plate 4 and another part on the opposite side of the blade 2 of the connection shaft attachment plate 5 are parallel to each other (whose flow directions of the electric current are antiparallel to each other). By arranging the earth line 7a to be parallel, in accordance with the Fleming's left hand rule, a repulsion force is generated between the parts of the earth line 7a. In the case of the arrangement shown in Fig. 3, a force in the direction of ripping the fixing bracket 9 from the blade attachment plate 4 is generated by the earth line 7a. Therefore, strength tolerable against such a force is required for the fixing bracket 9.

Fig. 4 shows the arrangement of the earth line 7a according to the third embodiment of the present invention. In the example of this figure, the hole 6c is formed on a peripheral area which is deviated from the center of the blade attachment plate 4a, so that the position of the hole 6c and the position of the hole 6b of the connection shaft attachment plate 5 are deviated to each other. The earth line 7a is derived from the internal space of the blade 2 to the internal space of the blade bearing 3 via the hole 6c. A mounting bracket 22 is mounted on the surface of the blade attachment plate 4a on the opposite side to the blade 2, namely, on the surface facing to the space formed by the blade attachment plate 4a, the inner surface part of the blade bearing 3, and the connection shaft attachment plate 5. The earth line 7a is arranged along a predetermined route on the blade attachment plate 4a by the mounting bracket 22. The earth line 7a is further conducted to the internal space of the rotor head 1 via the hole 6b. In the example of Fig. 4, the earth line 7a on the route on the blade attachment plate 4a and the earth line 7a on the route in the rotor head 1 are parallel to each other. The flow directions of the electric current flowing in the earth line 7a on the route on the blade attachment plate 4a and on the route in the rotor head 1 are antiparallel to each other. For applying the insulating member explained in Fig. 2 to this structure, the insulating members are attached to the inner surface side of the hole 6c, and the surface of the blade attachment plate 4a on the route where the earth line 7a is arranged.

When lightning strikes the wind turbine having the above structure, the lightning current 21 flows through the earth line 7a. The route of the earth line 7a on the blade attachment plate 4a and the route thereof in the rotor head 1 are parallel to each other. As a result, the earth line 7a on the blade attachment plate 4a is pushed onto the blade attachment plate 4a by the Lorentz force. The blade attachment plate 4a has a high strength for fixing the blades 2, and is fixed to the blade bearing 3 with high strength. Therefore, the blade attachment plate 4a can receive the Lorentz force applied to the earth line 7a with high strength. Since the force applied to the mounting bracket 22 is reduced, the strength required for the mounting bracket 22 is permitted to be smaller than the example shown in Fig. 3. According to such a structure, even when a large Lorentz force is applied to the earth line 7a, it is possible to support the force reliably.

Fig. 5 is a cross sectional view around the blade bearing 3 for explaining the wind turbine according to the fourth embodiment of the present invention. Only the portions different from the third embodiment will be explained. In this embodiment, the hole 6a of the blade attachment plate 4 and the hole 6b of the connection shaft attachment plate 5 may be formed at the same position correspondingly in the planar direction to each other, namely, in the center of each plate for example, similarly to the first embodiment. On the surface of the blade attachment plate 4 of the blade 2 side, the earth line 7a is fixed along a predetermined route by fixing brackets not shown in the drawings. The earth line 7a is conducted to the internal space of the rotor head 1 through the holes 6a and 6b. In the internal space of the rotor head 1, the earth line 7a is arranged along a predetermined route on the connection shaft attachment plate 5 by fixing brackets not shown in the drawings.

From the vertical (the direction normal to the connection shaft attachment plate 5) viewpoint, namely, in the planar arrangement viewed from the rotational axis of the blade bearing 3, the route of the earth line 7a on the blade attachment plate 4 and the route of the earth line 7a on the connection shaft attachment plate 5 are on a single straight line. In such a structure, when a lightning current 21 flows through the earth line 7a, since the earth line 7a on the blade attachment plate 4 side and the earth line 7a on the connection shaft attachment plate 5 side are not overlapped and separated to each other from the vertical view, the Lorentz force applied between each other is small. Therefore, the force applied to the fixing brackets can be reduced.

It is not required for the earth line 7a of the side of the blade attachment plate 4 and the earth line 7a of the side of the connection shaft attachment plate 5 to be accurately on a single straight line. It is enough for the earth line 7a on the side of the connection shaft attachment plate 5 to be arranged to be in the direction of extending (the direction of the flowing current therein) whose angle with at least a part of the earth line on the side of the blade attachment plate 4 is less than 90 degree. Further, it is possible for the earth line 7a to arrange such that the earth line 7a has a planar arrangement shown in Fig. 5 from the vertical viewpoint, and the route along the blade attachment plate 4 is on the surface of the blade attachment plate 4 opposite to the blade 2 as shown in Fig. 4.

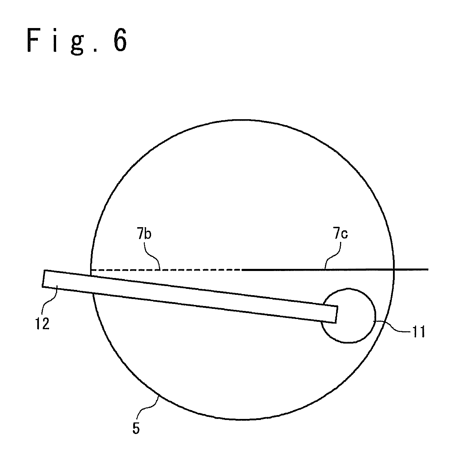

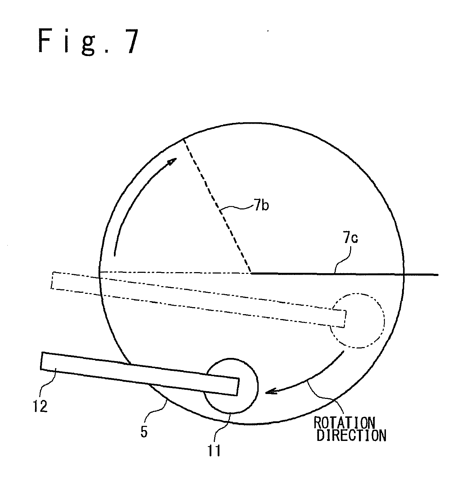

Referring to Figs. 6 and 7, the arrangement of the earth line 7a according to the fourth embodiment is explained in detail. Fig. 6 is a view of the arrangement of the earth line 7a shown from the connection shaft attachment plate 5 when the pitch angle of the blade 2 is controlled to the feather state. Fig. 7 shows the case where the pitch angle of the blade 2 is controlled to the fine in the normal operation. The earth lines 7b, 7c show the first part and the second part of the earth line 7a in Fig. 5, respectively. The earth line 7b of the side of the blade attachment plate 4 (the blade root part of the blade 2) is drawn in a dotted line, and the earth line 7c of the side of the connection shaft attachment plate 5 (in the rotor head) is drawn in a solid line.

When the weather is in the condition that the lightning strike may occur, the normal operation of the wind turbine is stopped. The pitch angle driving means 12 drives the connection shaft 11 for controlling the pitch angle of the blade 2 to the feather state. In this state, for suppressing the Lorentz force applied to the earth line 7a, it is preferable for the angle between the route of the earth line 7b and the route of the earth line 7c to be 90 degree or less, and more preferably, it is approximately parallel (their planar arrangement forms approximately a single straight line). Even though the whole earth line 7a satisfies the above angle condition, when the angle condition is satisfied for the earth line 7a in the range within a predetermined length from the hole 6a and the hole 6b, the Lorentz force operated between the earth line 7b and the earth line 7c can be suppressed. Specifically, the angle between the earth line 7b and the earth line 7c is preferably in the range of ±30 degree or less which is the level where the influence of the electromagnetic force generated in the passing of the lightning current becomes ignorable level.

In the normal operation of the wind turbine, the pitch angle driving means 12 rotates the blade 2 (the blade attachment plate 4) relatively to the rotor head 1 (the connection shaft attachment plate 5) so that the blades 2 become fine. In this state, the earth line 7b passing a route predetermined to the blade attachment plate 4 rotates relatively to the earth line 7c in the rotor head 1 as shown in Fig. 7. In the normal operation, since there is no anxiety of lightning strike, there occurs no problem even the direction of the current flow of the earth line 7b and the earth line 7c is deviated significantly from 0 degree.

In the above, some embodiments are explained. Those embodiments can be applied to the yaw bearing 109 between the tower 102 and the nacelle 103 of the wind turbine shown in Fig. 9. In this case, the earth line in the internal space of the nacelle 103 is conducted to the side of the tower 102 through the yaw bearing 109. According to this structure, the earth line can be grounded without flowing the lightning current through the yaw bearing 109.

In the above, the present invention is explained with reference to some embodiments. However, the present invention is not limited to those above embodiments. The above embodiments can be variously modified. For example, any combination of the above embodiments, if there is no contradiction, can be another embodiment of the present invention.

The present application claims a priority based on Japanese Patent Application No. 2011-105629, which was filed on May 10, 2011, and the disclosure of which is hereby incorporated into the present application by this reference.

## Claims

1. A wind turbine comprising:
a rotor head;
a blade on which a receptor for receiving a lightning discharge is mounted;
a bearing configured to connect the blade to the rotor head such that a pitch angle of the blade is variable; and
an earth line configured to conduct the lightning discharge to a side of the rotor head via the blade and a space of an internal side of the bearing.

2. The wind turbine according to claim 1, further comprising:
a blade attachment plate fixed to at least one of: an edge surface of a blade root of the blade; an inner surface of the blade root; and a step formed in the inner surface of the blade root, by a connecting means; and
the blade attachment plate has a through hole through which the earth line passes.

3. The wind turbine according to claim 2, further comprising:
an electrically insulating member formed on an inner side of the through hole.

4. The wind turbine according to claim 2 or 3, further comprising:
a plate member attached on the bearing in an opposite side of the blade attachment plate,
wherein the earth line which is drawn via the through hole into an opposite side of the blade is routed along a surface of the blade attachment plate in a side of the bearing, and further routed along a surface of the plate member in an opposite side of the blade.

5. The wind turbine according to claim 2 or 3, further comprising:
a plate member attached on the bearing in an opposite side of the blade attachment plate,
wherein a first part of the earth line is attached to the blade attachment plate on a surface of a side of the blade, and
a second part of the earth line is attached to the plate member in an opposite side of the blade, and
an angle between an extending direction of the first part of the earth line and an extending direction of the second part of the earth line is 90 degree or less.

6. The wind turbine according to claim 5, wherein the angle between the extending direction of the first part of the earth line and the extending direction of the second part of the earth line is 30 degree or less when the blade is in a feather position.

7. The wind turbine according to any of claims 1 to 6, wherein the earth line has a slack portion at a part in the bearing.

8. The wind turbine according to any of claims 1 to 7, further comprising:
a shield member fixed in the rotor head and configured to cover the earth line and made of a conductive material.
